# FASCICULE DE BREVET EUROPEEN

(11) **EP 2 126 797 B1**
(45) Date de publication et mention de la délivrance du brevet: **06.04.2011**
(21) Numéro de dépôt: 08762166.0
(22) Date de dépôt: 27.02.2008
(51) Int. Cl.: G06K 19/077, B42D 15/10

(54) **DOCUMENT DE SECURITE COMPRENANT UN DISPOSITIF RFID**
SICHERHEITSDOKUMENT MIT EINER RFID-VORRICHTUNG
SECURITY DOCUMENT INCLUDING AN RFID DEVICE

(30) Priorité: 28.02.2007 FR 0701461
(43) Date de publication de la demande: 02.12.2009
(73) Titulaire: Arjowiggins Security Integrale Solutions, 77320 Jouy sur Morin (FR)
(72) Inventeur: DELOCHE, Manuel, F-77700 Serris (FR); VICENTINI, Frédéric, F-94370 Sucy En Brie (FR)
(74) Mandataire: Tanty, François
(86) Numéro de dépôt international: PCT/FR2008/050331
(87) Numéro de publication internationale: WO 2008/119904

(56) Documents cités:
- WO-A-2005/056304
- WO-A-2005/062244
- US-A1- 2005 247 794

## Description

La présente invention concerne un document de sécurité, notamment un document d'identité, son procédé de fabrication et son utilisation.

De nos jours, les Etats mais aussi des organismes privés émettent de nombreux documents de sécurité qui doivent présenter un niveau de protection élevé tout en permettant une vérification aisée de leur l'authenticité par des agents ou des dispositif de contrôle. Il s'agit notamment de documents d'identité tels que des cartes d'identité, des passeports, des permis de conduire, mais aussi de documents tels que des cartes d'accès sécurisé, des billets de transport ou d'entrée à des manifestations culturelles ou sportives par exemple, des cartes d'abonnement.

Afin d'augmenter le niveau de sécurisation des documents de sécurité et de rendre leur falsification difficile ou impossible, depuis ces dix dernières années on a proposé de plus en plus de documents de sécurité munis de dispositifs RFID (dispositif d'identification radiofréquence). Ces dispositifs RFID, par exemple des puces associées à une antenne, présentent un grand avantage en ce qu'ils permettent de stocker et éventuellement de modifier des informations propres au porteur, au type de document émis. à l'historique des événements.

On connaît, par la demande EP 0 676 715, un document de sécurité comprenant un dispositif RFID, ledit document étant constitué de plusieurs couches en plastique, dont une couche interne est imprimable et une couche externe est transparente. Ce document de sécurité présente plusieurs inconvénients. En effet, une couche plastique ne peut pas être munie d'éléments de sécurité tels que les filigranes. Ces éléments présentent pourtant un haut niveau de sécurisation, car ils ne sont pas reproductibles par des moyens tels que la photocopie, tout en étant peu onéreux en termes de coûts de production. D'autre part, une telle structure multicouche réalisée uniquement en plastique présente une durée de vie limitée, du fait des risques de délamination de la structure. Or, de nombreux documents de sécurité, en particulier les documents d'identité émis par les états doivent avoir une durée de vie d'au moins dix ans.

Les demandes WO 2005/056304 et WO 2005/062244 divulguent un document de sécurité selon le préambule de la revendication 1.

On connaît, par la demande EP 1 556 228; un document de sécurité comprenant une couche de papier de sécurité, entourée de part et d'autre de deux couches de plastique transparent, la couche de papier pouvant être munie d'un dispositif RFID. Ce document de sécurité présente un inconvénient en ce que le dispositif RFID est repérable en transvision à travers les couches de plastique transparent, ce qui facilite sa falsification par d'éventuels faussaires.

Il existe donc un besoin constant de renforcer la sécurité des documents d'identité.

Le but de la présente invention est donc de proposer un document de sécurité comportant un dispositif RFID qui présente un niveau de sécurisation et de résistante à la falsification élevé.

Un autre but de l'invention est de proposer un document de sécurité comprenant un dispositif RFID dont la présence ne peut être détectée ni visuellement ni au toucher,

Un autre but de l'invention est de proposer un procédé de fabrication dudit document de sécurité simple, rapide et peu onéreux.

Les différents buts de l'invention sont atteints en proposant un document de sécurité, selon la revendication 1.

Le document de sécurité selon l'invention comporte un dispositif RFID, logé au sein d'au moins une couche transparente ou translucide, l'ensemble étant également appelée "couche inlay" dans la présente description.

Selon l'invention, ladite "couche externe recto" est la couche externe en un matériau thermoplastique transparent faisant face à la couche fibreuse et ladite "couche externe verso" est la couche externe en un matériau thermoplastique transparent faisant face à la couche inlay.

Le document de sécurité selon l'invention présente ainsi l'avantage de comprendre une couche fibreuse de sécurité. En effet, la technologie des éléments de sécurité dans des couches fibreuses, en particulier des couches de papier, est très bien maîtrisée, tout en offrant des garanties très élevées en termes de sécurisation. A titre d'exemple, on peut citer les filigranes dont l'effet est impossible à reproduire par photocopie couleur ou scanner.

Le dispositif RFID permet un haut niveau de sécurisation par sa capacité à stocker des informations accessibles uniquement au moyen d'un appareil de lecture et/ou d'écriture approprié. Le fait de loger le dispositif RFID dans une couche inlay permet de protéger le dispositif RFID, qui est généralement une pièce fragile, tout en rendant l'accès au dispositif RFID par d'éventuels faussaires particulièrement difficile.

Enfin, le fait que les couches externes en matériau thermoplastique et la couche inlay soient transparents permet de vérifier de chaque côté du document de sécurité la présence des éléments de sécurité de la couche fibreuse.

Selon un mode de réalisation de l'invention, ladite couche fibreuse présente des dimensions telles qu'au moins un bord du document final est dépourvu de couche fibreuse.

De préférence, la largeur du bord dépourvu de couche fibreuse est comprise entre 0,5 et 3 mm.

En particulier, tous les bords du document de sécurité final sont dépourvus de couche fibreuse. Ce mode de réalisation est particulièrement avantageux en ce qu'il permet de limiter les risques de délamination de la structure qui pourraient être dus à un défaut d'adhérence entre la couche fibreuse et les couches externes en un matériau thermoplastique transparent ou à un problème de cohésion de la couche fibreuse. Ceci permet également de limiter des tentatives d'éventuels faussaires pour accéder à la couche fibreuse afin de la modifier ou de la remplacer.

Selon un mode de réalisation de l'invention, le document comporte au moins une couche adhésive située entre la couche externe en un matériau thermoplastique transparent recto et la couche interne fibreuse, et/ou entre la couche interne fibreuse et la couche inlay, et/ou entre la couche inlay et la couche externe en un matériau thermoplastique transparent verso.

En particulier, le document comporte au moins deux couches adhésives de natures différentes.

Selon un exemple de réalisation préféré, au moins une des couches adhésives comprend un polyéthylène.

Selon un autre exemple, au moins une des couches adhésives comprend un éthylène vinyle acétate.

Selon un mode de réalisation particulier de l'invention, au moins une couche adhésive comprend un agent réticulant. Ce mode de réalisation permet de renforcer l'adhésion entre les différentes couches.

En particulier, ledit agent réticulant de la couche adhésive est réticulable sous l'action d'un rayonnement, notamment un rayonnement UV.

Selon un mode de réalisation de l'invention, au moins une des couches externes en un matériau thermoplastique transparent comporte un élément de sécurité. Ce mode de réalisation permet de renforcer encore le niveau de sécurisation du document de sécurité.

En particulier, ledit élément de sécurité peut être choisi parmi les colorant(s) et/ou les particules et/ou les pigments luminescents et/ou les pigments interférentiels, et/ou des pigments à cristaux liquides.

Selon un mode de réalisation de l'invention, les couches externes en un matériau thermoplastique transparent sont en un même matériau.

En particulier, au moins une couche externe en un matériau thermoplastique transparent comprend un polyéthylène téréphtalate.

Selon un mode de réalisation de l'invention, la couche inlay comprend un matériau plastique.

En particulier, la couche inlay comprend un matériau à base de polychlorure de vinyle (PVC), d'un polyéthylène téréphtalate (PET), d'un polycarbonate (PC), d'un polyester carbonate (PEC), d'un polyéthylène téréphtalate glycol (PETG) ou d'un acrylonitrile butadiène styrène (ABS).

Selon un mode de réalisation de l'invention, la couche inlay comprend au moins deux couches en plastique transparent, au sein desquelles est logé le dispositif RFID.

Selon un mode de réalisation préféré de l'invention, la couche inlay ne présente pas de surépaisseur. Ce mode de réalisation est particulièrement avantageux, car le dispositif RFID est ainsi indétectable au toucher. Par exemple, au moins une couche interne en un matériau transparent ou translucide comporte un logement destiné à recevoir le dispositif RFID.

Selon un mode de réalisation de l'invention, le dispositif RFID de la couche inlay affleure à au moins une des faces de ladite couche inlay. En particulier, le dispositif RFID affleure à chacune des faces de la couche inlay.

Selon un mode de réalisation de l'invention, le dispositif RFID comprend une puce et une antenne permettant une transmission sans contact. Par exemple, l'antenne comprend plusieurs spires, pouvant s'étendre sur tout ou partie de la surface de la couche inlay dans ladite couche inlay.

Selon un mode de réalisation de l'invention, la couche fibreuse comprend des fibres cellulosiques, en particulier des fibres de coton et/ou des fibres synthétiques.

Selon un mode de réalisation de l'invention, la couche fibreuse est une couche de papier d'une épaisseur d'environ 100 µm.

Selon un mode de réalisation particulier de l'invention, l'élément de sécurité de la couche fibreuse est choisi parmi les filigranes, les fils de sécurité, les fibres de sécurité, les dispositifs optiquement variables (OVD), les cristaux liquides, les éléments interférentiels, les éléments iridescents, les planchettes, les hologrammes, les fibres magnétiques, les pigments fluorescents et leurs combinaisons.

De préférence, la couche fibreuse comprend au moins un filigrane.

Selon un mode de réalisation de l'invention, la couche fibreuse comprend au moins une zone totalement dépourvue de fibres, formant une "fenêtre" traversante. Chaque fenêtre peut, par exemple, avoir une surface comprise entre 20 et 50 mm², pour une longueur comprise entre 6 et 10 mm. Ce mode de réalisation est très avantageux car la couche inlay et les couches externes du document de sécurité étant transparentes, le document de sécurité comprendra, au niveau de la fenêtre traversante, une zone complètement transparente. Cette caractéristique est particulièrement difficile à reproduire.

Selon un autre mode de réalisation de l'invention, la couche fibreuse comprend une bande au moins partiellement transparente, et au moins une des faces de ladite couche fibreuse comprend des zones dépourvues de fibres situées en regard de ladite bande. Par exemple, ladite bande est en un plastique transparent, et comprend des impressions holographiques ou des cristaux liquides, de sorte que la bande est transparente lorsqu'elle est observée en transvision. Ce mode de réalisation permet également d'obtenir un document de sécurité présentant une zone au moins partiellement transparente, difficilement reproductible. Par exemple, deux zones dépourvues de fibres peuvent être situées chacune sur une face de la couche fibreuse et en regard l'une de l'autre de façon à former une fenêtre traversante au travers de laquelle passe ladite bande.

Dans un autre exemple, des zones de la couche fibreuse sont partiellement dépourvues de fibres et sont toutes situées sur une même face de ladite couche fibreuse, formant ainsi des fenêtres non traversantes.

Selon un mode de réalisation particulier de l'invention, la couche fibreuse comprend un fil de sécurité apparaissant sur au moins une face de la couche fibreuse dans au moins une fenêtre.

Par fil de sécurité, on entend un élément de sécurité sous forme d'une bande présentant une largeur inférieure à 10 mm.

Selon un mode de réalisation de l'invention, la couche fibreuse du document de sécurité comprend des impressions, par exemple des impressions offset ou jet d'encre. Ces impressions peuvent par exemple correspondre aux mentions fixes et/ou aux mentions variables d'un document d'identité.

De préférence, lesdites impressions comprennent une photographie, par exemple du titulaire du document de sécurité.

Selon un mode de réalisation de l'invention, la couche fibreuse comprend au moins une zone de sécurité dite "anti-grattage" lui assurant une protection contre les falsifications mécaniques. Cette zone comporte un ensemble de régions d'épaisseur réduite (alvéoles), de sorte que toute tentative d'altération de la surface de la couche fibreuse conduit à percer la couche fibreuse. Un tel dispositif est par exemple décrit dans la demande de brevet EP 1 252 389. Ce mode de réalisation est particulièrement avantageux lorsque la zone de sécurité anti-grattage se trouve au niveau des impressions de la couche fibreuse, notamment d'une photographie.

Selon un mode de réalisation de l'invention, ladite couche fibreuse comprend des perforations, par exemple d'une surface comprise entre 0,2 et 7 mm², pour un diamètre compris par exemple entre 0,5 et 3 mm. Ce mode de réalisation est particulièrement avantageux en ce qu'il permet, lors de l'assemblage du document de sécurité, aux couches en un matériau thermoplastique transparent et/ou aux couches adhésives de diffuser à travers la couche fibreuse et ainsi de solidariser l'ensemble de la structure.

En particulier, les perforations forment un motif, tel qu'un motif alphanumérique et/ou un dessin, et/ou un symbole, de façon à fournir une sécurisation supplémentaire du document.

Selon un mode de réalisation de l'invention, le document de sécurité comprend une zone opaque située entre la couche inlay et la couche externe verso et dont, de préférence, au moins une partie est située en regard du dispositif RF1D de la couche inlay. Ce mode de réalisation est particulièrement avantageux car il permet d'éviter que le dispositif RFID ne soit visuellement repérable à travers la couche inlay.

De préférence, la zone opaque située entre la couche inlay et la couche externe verso couvre entièrement le dispositif RFID.

Selon un mode de réalisation de l'invention, la zone opaque est située sur une face de la couche inlay, en particulier sa face verso, c'est à dire sa face orientée vers la couche externe verso.

Selon un autre mode de réalisation de l'invention, ladite zone opaque est située sur la face interne de la couche externe verso.

Selon un mode de réalisation de l'invention, la zone opaque est une impression. La zone opaque peut, par exemple être une zone sérigraphiée.

Selon un cas particulier, ladite couche opaque s'étend sur une région correspondant à un bord de la couche fibreuse, sur une longueur correspondant à celle de la couche fibreuse et une largeur comprise entre un tiers et un quart de la largeur de la couche fibreuse.

Selon un cas particulier, ladite zone opaque est de couleur blanche.

Selon un mode de réalisation, la zone opaque présente de plus des impressions colorées, notamment noires. En particulier, ces impressions colorées peuvent être une suite de caractères, tels que des lettres et des chiffres constituant par exemple un code lisible par une machine, un code à barres, et correspondant, par exemple, au codage des informations imprimées sur la couche fibreuse du document de sécurité.

Selon un mode de réalisation de l'invention, lorsque la couche fibreuse présente des dimensions telles qu'au moins un bord du document final est dépourvu de couche fibreuse, au moins un bord du document de sécurité dépourvu de couche fibreuse est muni d'au moins une couche de compensation.

En particulier, tous les bords du document de sécurité sont munis de couches de compensation. De cette façon, on peut obtenir un document final qui ne présente pas de sous-épaisseur sur ses bords.

De préférence, ladite couche de compensation est transparente, de sorte que les bords du document de sécurité final sont transparents. Par exemple, au moins une couche de compensation est en plastique, tel qu'un polyéthylène téréphtalate ou un polychlorure de vinyle.

Dans un mode de réalisation particulier de l'invention, ladite couche de compensation comprend au moins un élément de sécurité. Il peut s'agir, par exemple de pigments ou de particules luminescents, en particulier fluorescents.

De préférence, l'épaisseur maximale du document de sécurité final est comprise entre 0,2 et 3 mm.

Selon un mode de réalisation de l'invention, le document de sécurité est un document d'identité et/ou d'authentification. Par exemple, le document de sécurité est une carte d'identité, un permis de conduire, une page de passeport, un badge d'accès.

En particulier, le document de sécurité selon l'invention est une carte d'identité présentant des dimensions conformes au format ID-1, c'est à dire 85,60 mm de longueur et 53,98 mm de largeur, ce qui correspond au format des cartes bancaires. Ce mode de réalisation est très avantageux, car de nombreux équipements industriels, par exemple de personnalisation, sont adaptés à ce format, qui est également d'une manipulation pratique pour l'utilisateur final.

L'invention concerne également un procédé de fabrication du document de sécurité décrit ci-dessus.

Selon l'invention, le procédé de fabrication comprend les étapes suivantes :
a) assembler une couche fibreuse comportant au moins un élément de sécurité avec au moins une couche en un matériau transparent ou translucide comprenant un dispositif RFID (couche inlay),
b) personnaliser la couche fibreuse par impression,
c) assembler l'ensemble comprenant la couche fibreuse et ladite au moins une couche en un matériau transparent ou translucide avec deux couches externes recto et verso en un matériau thermoplastique transparent, la couche externe recto étant assemblée sur la couche fibreuse et la couche externe verso étant assemblé sur ladite au moins une couche en un matériau thermoplastique transparent comprenant le dispositif RFID.

Le procédé de fabrication selon l'invention présente l'avantage de pouvoir être réalisé en plusieurs étapes indépendantes, dans des lieux différents. Par exemple, l'assemblage de la couche fibreuse et de la couche inlay est réalisé dans un site, alors que la personnalisation de la couche fibreuse est réalisée dans un autre site, par exemple par l'administration officielle délivrant la carte. Selon un mode de réalisation de l'invention, les mentions fixes du document de sécurité sont imprimées sur la couche fibreuse, notamment par impression offset, avant que ladite couche fibreuse ne soit assemblée avec la couche inlay.

De préférence, la feuille fibreuse comprend au moins une fenêtre traversante ou non.

De préférence, la feuille fibreuse comprend au moins un élément de sécurité choisi parmi les filigranes, les fils de sécurité, les perforations, et/ou une bande au moins partiellement transparente apparaissant dans une fenêtre.

Selon un mode de réalisation de l'invention, l'étape a) d'assemblage de la couche interne fibreuse et de la couche inlay est réalisée au moyen d'une couche adhésive.

En particulier, ladite couche adhésive est déposée sur la couche inlay.

Selon un mode de réalisation, l'étape a) d'assemblage est effectuée à froid (sans apport extérieur de température), en particulier par pression à froid.

Selon un mode de réalisation, l'étape a) d'assemblage est effectuée à chaud, en particulier par pression à chaud Par exemple, l'étape a) est réalisée à une température comprise entre 40 et 300 °C, de préférence entre 100 et 150 °C, en fonction de la nature de la couche adhésive ou de la nature de la face de couche inlay située en regard de la couche fibreuse.

Selon un mode de réalisation de l'invention, la couche fibreuse est personnalisée par impression jet d'encre des mentions variables du document de sécurité.

Selon un mode de réalisation de l'invention, après l'assemblage de la couche fibreuse et de la couche inlay à l'étape a), lesdites couches sont découpées dans leur format final, par exemple par découpage par affleurement.

Selon un mode de réalisation, l'étape c) d'assemblage des couches externes avec l'ensemble comprenant la couche fibreuse et ladite couche inlay assemblées à l'étape a) est réalisée au moyen d'au moins une couche adhésive.

En particulier les couches externes en un matériau thermoplastique transparent sont chacune recouvertes d'une couche adhésive.

Selon un mode de réalisation, l'étape c) d'assemblage est effectuée à froid (sans apport extérieur de température), en particulier par pression à froid.

Selon un mode de réalisation, l'étape c) d'assemblage est effectuée à chaud, en particulier par pression à chaud Par exemple, l'étape c) est réalisée à une température comprise entre 40 et 300°C, de préférence entre 100 et 130°C, en fonction de la nature des différentes couches, par exemple dans des laminateurs à carte.

Selon un mode de réalisation, les couches externes recto et verso constituent un seul support en un matériau plastique transparent, ledit support étant plié sur lui-même lors de l'étape c) d'assemblage selon une zone de pliage située au milieu dudit support.

Selon un mode de réalisation de l'invention, au moins une couche adhésive comprend un agent réticulant, en particulier réticulable sous l'action d'un rayonnement, par exemple un rayonnement UV.

En particulier, lorsque ladite couche adhésive comprend un agent réticulable sous l'action d'un rayonnement UV, on choisira les couches externes recto et verso de telle sorte qu'elles soient transparentes aux UV.

L'invention va maintenant être décrite plus en détails à l'aide des figures annexées dans lesquelles :
- la figure 1 représente une vue en coupe schématique d'un document de sécurité selon un mode de réalisation de l'invention,
- la figure 2 représente une vue en coupe schématique d'un document de sécurité selon un autre mode de réalisation de l'invention,
- la figure 3 représente une vue un coupe schématique d'un document de sécurité selon un autre mode de réalisation de l'invention,
- la figure 5a représente une vue de dessus d'un document de sécurité selon l'invention,
- la figure 5b représente une vue de dessous du document de sécurité de la figure 5a,
- la figure 5c représente une vue en coupe du document de sécurité des figures 5a et 5b selon le plan I-I.

Par souci de clarté, les proportions relatives des différents éléments n'ont pas été respectées.

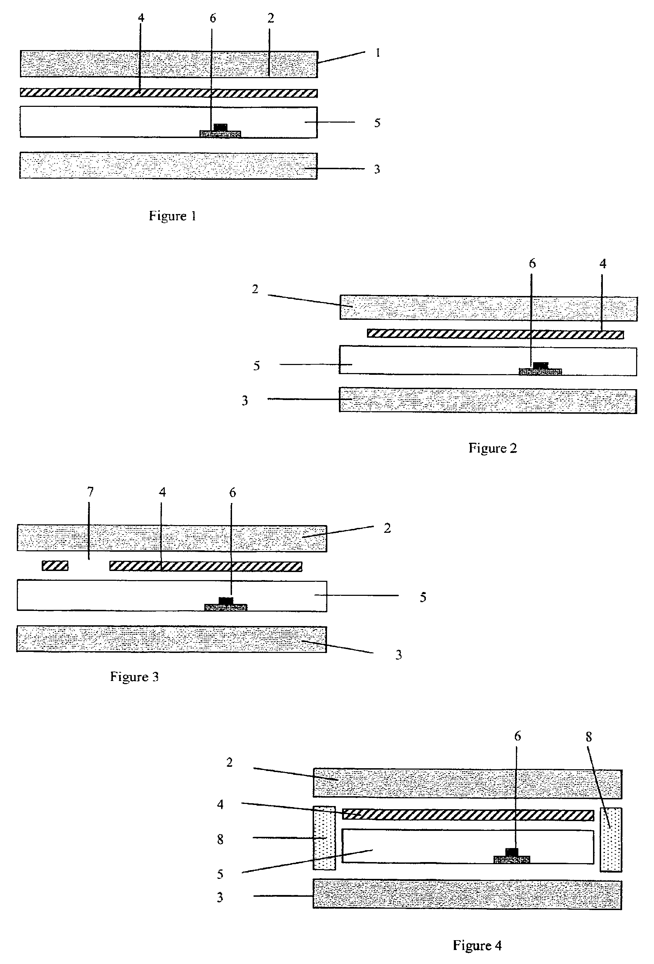

La figure 1 représente une vue en coupe d'un document de sécurité (1) qui est une carte d'identité d'une longueur de 85,60 mm et d'une largeur de 53,98 mm réalisée selon un mode de réalisation de l'invention. Le document (1) comprend deux couches externes recto (2) et verso (3) en un polyéthylène téréphtalate entourant une couche inlay (5) d'une épaisseur de 400 µm comprenant deux couches de PVC et une puce (6) munie d'une antenne non représentée, la puce (6) affleurant à une face de la couche inlay (5), et une couche interne fibreuse (4) d'une épaisseur de 100 µm comprenant des éléments de sécurité non représentés, toutes les couches du document de sécurité (1) présentant les mêmes dimensions.

La figure 2 représente une vue de coupe d'un document de sécurité (1) semblable à celui présenté à la figure 1, à l'exception du fait que la couche fibreuse (4) présente des dimensions réduites par rapport aux autres couches, si bien que les bords du document de sécurité (1) sont transparents.

La figure 3 représente une vue en coupe d'un document de sécurité (1), semblable à celui représenté à la figure 2, mais dont la couche de papier (4) comporte une fenêtre traversante (7). De cette façon, du fait de la transparence de la couche inlay (5) et des couches externes (2, 3) le document de sécurité (1) présente une zone totalement transparente, située en regard de la fenêtre de la couche fibreuse (4). Cette caractéristique est particulièrement avantageuse, car elle est très difficile à reproduire par d'éventuels faussaires.

La figure 4 représente une vue en coupe d'un document de sécurité (1) semblable à celui représenté à la figure 2 mais dont la couche inlay (5) présente les mêmes dimensions que la couche fibreuse (4). Le document de sécurité (1) comporte en outre une couche de compensation (8) transparente située entre les couches externes transparentes (2, 3), au niveau des bords du document de sorte que le document de sécurité final présente une épaisseur constante sur toute sa surface.

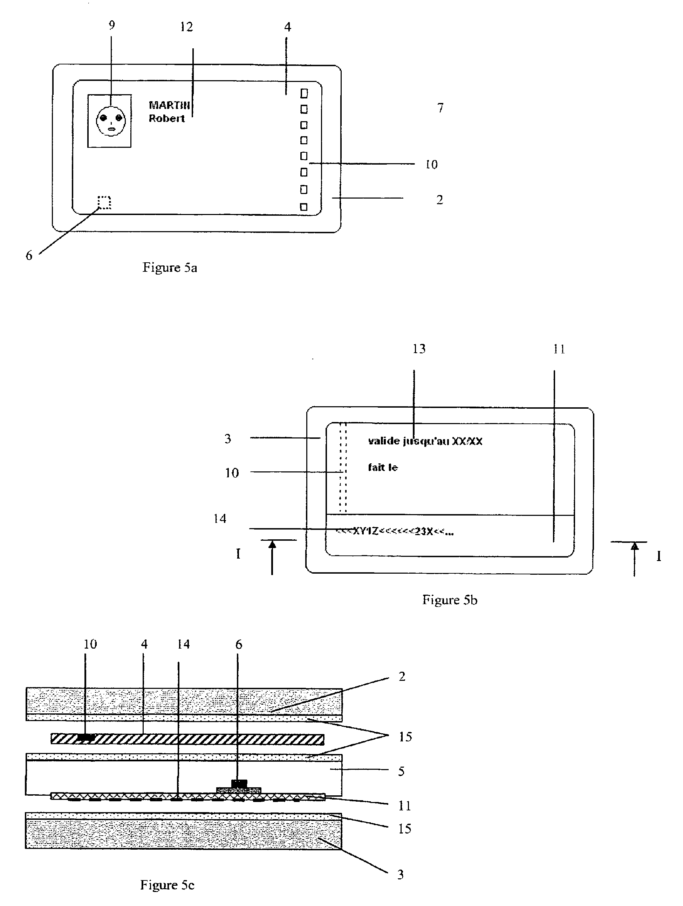

La figure 5a représente une vue de dessus d'un document de sécurité (1), par exemple d'une carte d'identité selon l'invention. La carte d'identité (1) dont les bords sont transparents comprend une couche fibreuse (4) que l'on peut voir à travers la couche externe transparente recto (2). Pour un observateur regardant la carte d'identité (1) du dessus (côté face recto), la couche inlay (5) comprenant une puce (6) est placée en dessous de la couche fibreuse (4), de sorte que l'observateur voit la face "recto" de la couche fibreuse (4) mais pas la puce (6). La couche fibreuse (4) comprend un fil de sécurité (10) incorporé dans la masse de ladite couche fibreuse (4) et apparaissant dans des fenêtres (7) non traversantes ménagées dans la couche fibreuse (4).

La couche fibreuse (4) comporte également à sa surface "recto" la photographie (9) du détenteur de la carte, imprimée en couleurs, ainsi que des informations imprimées (12) relatives au porteur.

La figure 5b représente une vue de dessous du document représenté à la figure 5a. La couche inlay (5) se trouve placée sous la couche externe transparente verso (3) et la couche fibreuse (4) est située sous la couche inlay transparente (5) de sorte que l'on peut observer en partie la face "verso" de la couche fibreuse (4).

La couche fibreuse (4) présente des informations imprimées (13) sur sa face "verso". La couche inlay transparente (5) comporte, sur sa face côté verso du document de sécurité, une zone opaque (11) en une encre opaque blanche. Cette zone opaque (11) est une couche continue située dans la partie inférieure de la carte, au niveau d'un bord de la couche fibreuse (4) et en regard de la puce (6). La zone opaque (11) s'étend sur une longueur égale à celle de la couche fibreuse (4) et une largeur correspondant au tiers de la largeur de la couche fibreuse (4). De cette manière, la puce (6) est masquée de part et d'autre de la couche inlay (5) par la zone opaque (11) d'un côté et par la couche fibreuse (4) de l'autre côté, et est donc visuellement indétectable. Dans la zone opaque (11) est imprimée une ligne codée (14), ici une ligne codée, dite MRZ, correspondant à des informations imprimées (12, 13) sur les faces de la couche fibreuse (4). Le fil de sécurité (10) n'apparaît pas sur la face "verso" de la couche fibreuse (4) mais est visible en transvision.

La figure 5c représente une vue en coupe au niveau de la zone opaque (11) selon le plan 1-1 du document de sécurité (1) représenté aux figures 5a et 5b. Le document de sécurité (1) comprend trois couches adhésives (15) à base un polyéthylène transparent disposées respectivement entre la couche externe recto (2) et la couche fibreuse (4), entre la couche fibreuse (4) et la couche inlay (5) et entre la couche inlay (5) et la couche externe verso (3). Le fil de sécurité (10) affleure dans une fenêtre (7) non traversante de la face recto de la couche fibreuse (4).

## Revendications

1. Document de sécurité (1) comprenant une couche interne fibreuse (4) comportant au moins un élément de sécurité, une couche externe recto (2) faisant face à la couche fibreuse et une couche externe verso (3), les deux couches externes (2, 3) étant en un matériau thermoplastique transparent, un dispositif RFID (6) **caractérisé par le fait que** le dispositif RFID (6) est logé au sein d'au moins une couche interne (5) en un matériau transparent ou translucide, la couche externe, vers en faisant face à la dite couche interne (5) en un matériau transparent ou translucide.

2. Document de sécurité (1) selon la revendication 1, **caractérisé en ce que** ladite couche fibreuse (4) présente des dimensions telles qu'au moins un bord du document final (1) est dépourvu de couche fibreuse (4) ledit bord du document de sécurité final (1) dépourvu de couche fibreuse (4) présentant une largeur compris entre 0,5 et 3 mm.

3. Document de sécurité (1) selon l'une des revendications précédentes, **caractérisé en ce que** ledit document (1) comporte au moins une couche adhésive (15) située entre la couche externe en un matériau thermoplastique transparent recto(2) et la couche interne fibreuse (4), et/ou entre la couche interne fibreuse (4) et ladite au moins une couche interne (5) en un matériau transparent ou translucide contenant un dispositif RFID(6), et/ou entre la couche interne en un matériau transparent ou translucide (5) comprenant un dispositif RFID (6) et la couche externe en un matériau thermoplastique transparent verso (3).

4. Document de sécurité (1) selon la revendication 3, **caractérisé en ce que** ladite au moins une couche adhésive (15) comprend un agent réticulable sous l'action d'un rayonnement, notamment un rayonnement UV.

5. Document de sécurité (1) selon l'une des revendications précédentes, **caractérisé en ce que** la couche fibreuse (4) comprend au moins une zone totalement dépourvue de fibres, formant une fenêtre (7).

6. Document de sécurité (1) selon l'une des revendications 1 à 4, **caractérisé en ce que** la couche fibreuse (4) comprend au moins une zone partiellement dépourvue de fibres.

7. Document de sécurité (1) selon l'une des revendications précédentes, **caractérisé en ce que** la couche fibreuse (4) comprend des impressions (9, 12, 13), notamment une photographie (9) présentant des régions d'épaisseur réduite, et/ou des perforations formant un motif, en particulier un motif alphanumérique, et/ou un dessin, et/ou un symbole.

8. Document de sécurité (1) selon l'une des revendications précédentes, **caractérisé en ce que** ladite au moins une couche interne en un matériau transparent ou translucide (5) comprenant un dispositif RFID (6) est en un matériau plastique.

9. Document de sécurité (1) selon l'une des revendications précédentes, **caractérisé en ce que** ladite au moins une couche interne (5) en un matériau transparent ou translucide comprenant un dispositif RFID (6) comprend au moins deux couches en un matériau plastique transparent au sein desquelles est logé le dispositif RFID , ladite au moins une couche interne en un matériau transparent ou translucide (5) comprenant un dispositif RFID (6) ne présente pas de surépaisseur.

10. Document de sécurité (1) selon l'une des revendications précédentes, **caractérisé en ce que** ledit document de sécurité (1) comprend une zone opaque (11) située entre ladite au moins une couche interne en un matériau transparent au translucide comprenant un dispositif RFID et une couche externe en un matériau thermoplastique transparent (3).

11. Document de sécurité (1) selon l'une des revendications 2 à 10, **caractérisé en ce que** le ou les bords du document dépourvus de couche fibreuse (4) sont munis d'au moins une couche de compensation (8), de sorte que le document de sécurité final (1) ne présente pas de sous épaisseur sur ses bords.

12. Procédé de fabrication d'un document de sécurité (1) tel que décrit à l'une des revendications précédentes, comprenant les étapes suivantes :
a) assembler une couche fibreuse (4) comportant au moins un élément de sécurité (10) avec au moins une couche (5) en un matériau transparent ou translucide comprenant un dispositif RFID (6),
b) personnaliser la couche fibreuse (4) par impression,
c) assembler l'ensemble comprenant la couche fibreuse (4) et ladite au moins une couche (5) en un matériau transparent ou translucide comprenant un dispositif RFID (6) avec deux couches externes recto (2) et verso (3) en un matériau thermoplastique transparent, la couche externe recto (2) étant assemblée sur la couche fibreuse (4) et la couche externe verso (3) étant assemblé sur ladite au moins une couche (5) en un matériau thermoplastique transparent comprenant le dispositif RFID (6).

13. Procédé de fabrication selon la revendication 12, **caractérise en ce que** l'étape a) d'assemblage de la couche interne fibreuse (4) et de la couche (5) en un matériau transparent ou translucide comprenant un dispositif RFID (6) et/ou **en ce que** l'étape c) d'assemblage des couches externes (2, 3) de l'ensemble comprenant la couche fibreuse (4) et de la dite au moins une couche (5) en un matériau transparent ou translucide comprenant un dispositif RFID (6) est réalisée au moyen d'une couche adhésive (15) comprenant un agent réticulant, en particulier un agent réticulable sous l'action d'un rayonnement.

14. Procédé de fabrication selon l'une des revendications 12 et 13, et 13, **caractérisé en ce que** l'étape a) d'assemblage et/ou l'étape c) d'assemblage est effectuée à froid, en particulier par pression à froid.

15. Procédé de fabrication selon l'une des revendications 12 et 13, **caractérisé en ce que** l'étape a) d'assemblage et/ou l'étape c) d'assemblage est effectuée à chaud, en particulier par pression à chaud.

16. Procédé de fabrication selon l'une des revendications 12 à 15 , **caractérisé en ce que** les couches externes recto et verso constituent un seul support en un matériau plastique transparent, ledit support étant plié sur lui-même lors de l'étape c) d'assemblage selon une zone de pliage située au milieu dudit support.

17. Procédé de fabrication selon l'une des revendications 12 à 16, **caractérisé en ce qu'**après l'assemblage de la couche interne fibreuse (4) et de la couche (5) en un matériau transparent ou translucide comprenant un dispositif RFID (6), lesdites couches (4, 5) sont découpées dans leur format final.

## Claims

1. A security document (1) comprising a fiber inner layer (4) having at least one security element, a recto outer layer (2) facing the fiber layer, and a verso outer layer (3), the two outer layers (2, 3) being made of transparent thermoplastic material, and an RFID device (6), **characterized by** the fact that the RFID device (6) is housed within at least one inner layer (5) of a material that is transparent or translucent, the verso outer layer facing said inner layer (5) of a material that is transparent or translucent.

2. A security document (1) according to claim 1, **characterized in that** said fiber layer (4) presents dimensions such that at least one margin of the final document (1) is devoid of fiber layer (4), said margin of the final security document (1) that is devoid of fiber layer (4) presenting a width lying in the range 0.5 mm to 3 mm.

3. A security document (1) according to any preceding claim, **characterized in that** said document (1) includes at least one adhesive layer (15) situated between the recto outer layer (2) of transparent thermoplastic material and the inner fiber layer (4), and/or between the inner fiber layer (4) and said at least one inner layer (5) of transparent or translucent material containing an RFID device (6), and/or between the inner layer of transparent or translucent material (5) containing an RFID device (6) and the verso outer layer (3) of transparent thermoplastic material.

4. A security document (1) according to claim 3, **characterized in that** said at least one adhesive layer (15) includes a cross-linking agent, when irradiated, in particular by UV radiation.

5. A security document (1) according to any preceding claim, **characterized in that** the fiber layer (4) comprises at least one zone that is completely devoid of fibers, forming a window (7).

6. A security document (1) according to any one of claims 1 to 4, **characterized in that** the fiber layer (4) includes at least one zone that is partially devoid of fibers.

7. A security document (1) according to any preceding claim, **characterized in that** the fiber layer (4) includes printing (9, 12, 13), in particular a photograph (9), the presenting regions of reduced thickness, and/or perforations forming a pattern, in particular an alphanumeric pattern and/or a design and/or a symbol.

8. A security document (1) according to any preceding claim, **characterized in that** said at least one inner layer (5) of transparent or translucent material including an RFID device (6) is made of a plastics material.

9. A security document (1) according to any preceding claim, **characterized in that** said at least one inner layer (5) of transparent or translucent material including an RFID device (6) comprises at least two layers of transparent plastics material in which the RFID device is housed, said at least one inner layer (5) of transparent or translucent material including an RFID device (6) not presenting portions of extra thickness.

10. A security document (1) according to any preceding claim, **characterized in that** said security document (1) includes an opaque zone (11) situated between said at least one inner layer (5) of transparent or translucent material including an RFID device (6) and an outer layer (3) of transparent thermoplastic material.

11. A security document (1) according to any one of claims 2 to 10, **characterized in that** the margin(s) of the document devoid of fiber layer (4) are provided with at least one compensation layer (8) such that the final security document (1) does not present any reduced thickness at its margins.

12. A method of fabricating a security document (1) as described in any preceding claim, the method comprising the following steps:
a) assembling together a fiber layer (4) including at least one security element (10) and at least one layer (5) of transparent or translucent material including an RFID device (6);
b) personalizing the fiber layer (4) by printing;
c) assembling together the fiber layer (4) and said at least one layer (5) of transparent or translucent material including an RFID device (6) with recto and verso outer layers (2, 3) of transparent thermoplastic material, the recto outer layer (2) being assembled with the fiber layer (4) and the verso outer layer (3) being assembled with said at least one layer (5) of transparent or translucent thermoplastic material including an RFID device (6).

13. A fabrication method according to claim 12, **characterized in that** the step a) of assembling together the inner fiber layer (4) and the layer (5) of transparent or translucent material including an RFID device (6) and/or the step c) of assembling together the outer layers (2,3) of the assembly comprising the fiber layer (4) and said at least one layer (5) of transparent or translucent material including an RFID device (6) is achieved by means of an adhesive layer (15), comprising a cross-linking agent, in particular a cross-linking agent that can be cross-linked under the action of radiation.

14. A fabrication method according to claim 12 or claim 13, **characterized by** the fact that assembly step a) and/or c) is performed cold, in particular by cold pressing.

15. A fabrication method according to claim 12 or claim 13, **characterized by** the fact that assembly step a) and/or c) is performed hot, in particular by hot pressing.

16. A fabrication method according to any one of claims 12 to 15, **characterized by** the fact that the recto and verso outer layers are made on a single sheet of transparent plastics material, said sheet being folded in half during assembly step c) along a fold line situated in the middle of said sheet.

17. A fabrication method according to any one of claims 12 to 16, **characterized in that** after the inner fiber layer (4) and the layer (5) of transparent or translucent material including an RFID device (6) have been assembled together, said layers (4, 5) are cut to their final format.

## Patentansprüche

1. Sicherheitsdokument (1) mit einer internen Faserschicht (4), die wenigstens ein Sicherheitselement aufweist, einer externen Vorderseitenschicht (2), die der Faserschicht gegenüberliegt, und einer externen Rückseitenschicht (3), wobei die beiden externen Schichten (2, 3) aus einem thermoplastischen transparenten Material sind, und mit einer RFID-Vorrichtung (6), **dadurch gekennzeichnet, dass** die RFID-Vorrichtung (6) im Inneren wenigstens einer Innenschicht (5) aus einem transparenten oder transluziden Material liegt, wobei die externe Rückseitenschicht der Innenschicht (5) aus dem transparenten oder transluziden Material gegenüberliegt.

2. Sicherheitsdokument (1) nach Anspruch 1, **dadurch gekennzeichnet, dass** die Faserschicht (4) so dimensioniert ist, dass wenigstens ein Rand des endgültigen Dokuments (1) frei von der Faserschicht (4) ist, wobei dieser Rand des endgültigen Sicherheitsdokuments (1), der frei von der Faserschicht (4) ist, eine Größe zwischen 0,5 und 3 mm hat.

3. Sicherheitsdokument (1) nach einem der vorstehenden Ansprüche, **dadurch gekennzeichnet; dass** das Dokument (1) wenigstens eine Klebeschicht (15) aufweist, die zwischen der externen Vorderseitenschicht (2) aus dem thermoplastischen transparenten Material und der internen Faserschicht (4) und/oder zwischen der internen Faserschicht (4) und der wenigstens einen Innenschicht (5) aus dem transparenten oder transluziden Material, die die RFID-Vorrichtung (6) aufweist, und/oder zwischen der Innenschicht (5) aus dem transparenten oder transluziden Material, die die RFID-Vorrichtung (6) aufweist, und der externen Rückseitenschicht aus dem thermoplastischen transparenten Material liegt.

4. Sicherheitsdokument (1) nach Anspruch 3, **dadurch gekennzeichnet, dass** die wenigstens eine Klebeschicht (15) eine Substanz aufweist, die unter Einwirkung von Strahlung, insbesondere UV-Strahlung, vernetzbar ist.

5. Sicherheitsdokument (1) nach einem der vorstehenden Ansprüche, **dadurch gekennzeichnet, dass** die Faserschicht (4) wenigstens eine Zone aufweist, die vollkommen frei von Fasern ist und ein Fenster (7) bildet.

6. Sicherheitsdokument (1) nach einem der Ansprüche 1 bis 4, **dadurch gekennzeichnet, dass** die Faserschicht (4) wenigstens eine Zone aufweist, die teilweise frei von Fasern ist.

7. Sicherheitsdokument (1) nach einem der vorstehenden Ansprüche, **dadurch gekennzeichnet, dass** die Faserschicht (4) Aufdrucke (9, 12, 13), insbesondere eine Fotografie (9) mit Regionen verringerter Dicke, und/oder Perforationen, die ein Motiv bilden, aufweist, insbesondere ein alphanumerisches Motiv und/oder eine Zeichnung und/oder ein Symbol.

8. Sicherheitsdokument (1) nach einem der vorstehenden Ansprüche, **dadurch gekennzeichnet, dass** die wenigstens eine Innenschicht (5) aus dem transparenten oder transluziden Material, die die RFID-Vorrichtung (6) aufweist, aus einem Kunststoffmaterial ist.

9. Sicherheitsdokument (1) nach einem der vorstehenden Ansprüche, **dadurch gekennzeichnet, dass** die wenigstens eine Innenschicht (5) aus dem transparenten oder transluziden Material, die die RFID-Vorrichtung (6) aufweist, wenigstens zwei Schichten aus einem transparenten Kunststoffmaterial aufweist, zwischen denen die RFID-Vorrichtung angeordnet ist, wobei die wenigstens eine Innenschicht (5) aus dem transparenten oder transluziden Material, die die RFID-Vorrichtung (6) aufweist, keine Übergangsstelle aufweist.

10. Sicherheitsdokument (1) nach einem der vorstehenden Ansprüche, **dadurch gekennzeichnet, dass** das Sicherheitsdokument (1) eine undurchsichtige Zone (11) aufweist, die zwischen der wenigstens einen Innenschicht aus dem transparenten oder transluziden Material, die die RFID-Vorrichtung aufweist, und einer externen Schicht (3) aus einem thermoplastischen transparenten Material angeordnet ist.

11. Sicherheitsdokument (1) nach einem der Ansprüche 2 bis 10, **dadurch gekennzeichnet, dass** der oder die Ränder des Dokuments, die frei von der Faserschicht (4) sind, mit wenigstens einer Kompensationsschicht (8) versehen sind, so dass das endgültige Sicherheitsdokument (1) keine Verdünnungen an seinen Rändern aufweist.

12. Verfahren zur Herstellung eines Sicherheitsdokuments (1), wie in einem der vorstehenden Ansprüche beschrieben, wobei in dem Verfahren:
(a) eine wenigstens ein Sicherheitselement (10) aufweisende Faserschicht (4) mit wenigstens einer Schicht (5) aus einem transparenten oder transluziden Material, die eine RFID-Vorrichtung (6) aufweist, verbunden wird,
(b) die Faserschicht (4) durch Aufdruck personalisiert wird,
(c) die Gesamtheit aus der Faserschicht (4) und der wenigstens einen Schicht (5) aus dem transparenten oder transluziden Material, die die RFID-Vorrichtung (6) auf weist, mit zwei externen Schichten aus einem thermoplastischen transparenten Material auf der Vorderseite (2) und der Rückseite (3) verbunden wird, wobei die externe Vorderseitenschicht (2) mit der Faserschicht (4) und die externe Rückseitenschicht (3) mit der wenigstens einen Schicht (5) aus dem transparenten oder transluziden Material, die die RFID-Vorrichtung (6) aufweist, verbunden wird.

13. Herstellungsverfahren nach Anspruch 12, **dadurch gekennzeichnet, dass** der Schritt (a) des Verbindens der internen Faserschicht (4) mit der Schicht (5) aus dem transparenten oder transluziden Material, die die RFID-Vorrichtung (6) aufweist, und/oder der Schritt (c) des Verbindens der externen Schichten (2, 3) mit der Gesamtheit aus der Faserschicht (4) und der wenigstens einen Schicht (5) aus dem transparenten oder transluziden Material, die die RFID-Vorrichtung (6) aufweist, mittels einer Klebeschicht (15) realisiert wird, die eine vernetzbare Substanz aufweist, insbesondere eine Substanz, die unter Einwirkung von Strahlung vernetzbar ist.

14. Herstellungsverfahren nach Anspruch 12 oder 13, **dadurch gekennzeichnet, dass** der Verbindungsschritt (a) und/oder der Verbindungsschritt (c) kalt erfolgt, insbesondere durch Kaltpressen.

15. Herstellungsverfahren nach Anspruch 12 oder 13, **dadurch gekennzeichnet, dass** der Verbindungsschritt (a) und/oder der Verbindungsschritt (c) warm erfolgt, insbesondere durch Warmpressen.

16. Herstellungsverfahren nach einem der Ansprüche 12 bis 15, **dadurch gekennzeichnet, dass** die externen Schichten auf der Vorder- und Rückseite einen einzigen Träger aus einem transparenten Kunststoffmaterial darstellen, wobei der Träger durch den Verbindungsschritt (c) in einer Biegezone in der Mitte des Trägers auf sich selbst gebogen ist.

17. Herstellungsverfahren nach einem der Ansprüche 12 bis 16, **dadurch gekennzeichnet, dass** nach dem Verbinden der internen Faserschicht (4) mit der Schicht (5) aus dem transparenten oder transluziden Material, die die RFID-Vorrichtung (6) aufweist, die genannten Schichten (4) in ihr endgültiges Format geschnitten werden.
